# EUROPÄISCHE PATENTSCHRIFT

(11) **EP 2 076 707 B1**
(45) Veröffentlichungstag und Bekanntmachung des Hinweises auf die Patenterteilung: **30.06.2010**
(21) Anmeldenummer: 07820127.4
(22) Anmeldetag: 11.09.2007
(51) Int. Cl.: F17C 5/00

(54) **VORRICHTUNG ZUM SCHNELLEN BEFÜLLEN VON DRUCKGASBEHÄLTERN**
APPARATUS FOR THE RAPID FILLING OF COMPRESSED GAS CONTAINERS
DISPOSITIF POUR LE REMPLISSAGE RAPIDE DE RÉCIPIENTS DE GAZ SOUS PRESSION

(30) Priorität: 06.10.2006 DE 102006047313
(43) Veröffentlichungstag der Anmeldung: 08.07.2009
(73) Patentinhaber: Deutsches Zentrum für Luft- und Raumfahrt e.V., 51147 Köln (DE)
(72) Erfinder: BÄUMER, Klaus, 53229 Bonn (DE); GRULICH, Dirk, 53721 Siegburg (DE); RACHNER, Michael, 51145 Köln (DE); SCHOLZ, Norbert, 53842 Troisdorf (DE); WIEGAND, Herbert, 51147 Köln (DE)
(74) Vertreter: von Kreisler Selting Werner
(86) Internationale Anmeldenummer: PCT/EP2007/059522
(87) Internationale Veröffentlichungsnummer: WO 2008/043632

(56) Entgegenhaltungen:
- EP-A- 1 500 864
- WO-A-03/060374
- DE-A1- 2 121 328
- DE-A1-102005 006 751
- JP-A- 6 159 595

## Beschreibung

Die Erfindung betrifft eine Vorrichtung zum schnellen Befüllen von Druckgasbehältern, mit einem Vorratsbehälter, in den Gas durch einen Verdichter eingeführt, und insbesondere eine Vorrichtung zum schnellen Umfüllen von Gasen in großen Mengen, wie Erdgas, Methan, Stickstoff, Sauerstoff, Argon, Luft oder Wasserstoff unter hohem Druck, wie es beispielsweise beim schnellen Betanken von mit Erdgas betriebenen Bussen oder Kommunalfahrzeugen aus einem Vorratsbehälter benötigt wird.

Bei Gasbetankungsvorgängen soll unabhängig von der Umgebungstemperatur eine solche Gasmasse in den Druckgasbehälter eingefüllt werden, dass damit ein nach den technischen Regeln vorgegebener Grenzwert des Druckes im Druckgasbehälter bei einer vorgegebenen Bezugstemperatur nach Möglichkeit erreicht wird. Beispielsweise darf bei Druckgasbehältern für Erdgas nach technischen Regeln ein Druck von 200 bar im Druckgasbehälter bei einer Bezugstemperatur von 15°C nicht überschritten werden. Zur schnellen Durchführung eines Betankungsvorgangs durch Überströmen muss der Vorratsbehälter unter einem hohen Druck stehen, damit die benötigte Gasmasse in den Druckgasbehälter überführt wird.

Bei Gasbetankungsanlagen führt die aufzubringende Einschiebearbeit zu einer Erwärmung des Gases im Druckgasbehälter. Der Joule-Thomson-Effekt (Temperaturänderung des Gases durch Drosselung) des realen Gases wirkt dieser Erwärmung im Allgemeinen entgegen. Jedoch nur unter sehr günstigen Bedingungen, d. h. bei ausreichend niedriger Temperatur reicht der Joule-Thomson-Effekt und die Wärmeabgabe an die Umgebung aus, um die durch die Einschiebearbeit des Gases verursachte Erwärmung zu kompensieren. Sind diese günstigen Bedingungen nicht gegeben, so kommt es in Gasbetankungsanlagen ohne Kühlvorrichtung beim schnellen Umfüllen zu einer Unterfüllung des Druckgasbehälters. Der Grund hierfür ist, dass sich durch die Einschiebearbeit eine hohe Temperatur und damit ein entsprechend hoher Druck im Druckgasbehälter einstellt, was die zur Verfügung stehende Druckdifferenz für die Befüllung so stark erniedrigt, dass der Betankungsvorgang lange dauert und daher abgebrochen wird, bevor der Druckgasbehälter die nach den technischen Regeln mögliche Gasmasse enthält.

Eine Vorrichtung zum schnellen Befüllen von Druckgasbehältern nach dem Oberbegriff des Patentanspruchs 1 ist beschrieben in WO 03/060374 A1. Die Vorrichtung weist einen Niederdruckniveauspeicher auf, dem ein zweistufiges Verdichtersystem nachgeschaltet ist. Hinter der ersten Verdichterstufe ist ein Kühler zur Kühlung des komprimierten Gases angeordnet. Das zweistufige Verdichtersystem speist zwei Mitteldruckspeicher bzw. Niederdruckspeicher, die mit der Tankleitung verbunden sind. Außerdem speist das Verdichtersystem einen Hochdruckspeicher, der ebenfalls mit der Tankleitung verbunden ist. Während eines Betankungsvorgangs wird das Gas, das auf wenigstens drei Druckniveaus verdichtet ist, zunächst aus dem Niederdruckniveauspeicher und anschließend aus dem Mitteldruckniveauspeicher entnommen, wobei der zu befüllende Tank auf den in dem Mitteldruckniveauspeicher herrschenden Druck gefüllt werden kann.

DE 197 05 601 A1 beschreibt ein Erdgas-Betankungsverfahren ohne Kühlung des Gases, bei dem der Betankungsvorgang des Druckgasbehälters solange durchgeführt wird, bis der Druck in der Leitung zum Druckgasbehälter einen Höchstdruck überschreitet. Eine andere Möglichkeit sieht vor, dass der Betankungsvorgang abgebrochen wird, wenn der Massenstrom einen Grenzwert unterschreitet.

WO 97/06383 A1 beschreibt ein Gas-Ladesystem für Hochdruckflaschen. Die Kühlung des Gases erfolgt hier durch Spülung der zu füllenden Hochdruckflasche, wodurch zwei Anschlüsse für Vor- und Rücklauf benötigt werden. Im Spülkreislauf wird das Gas durch einen Wärmetauscher oder durch Vermischen mit dem Gas im Vorratsbehälter gekühlt.

EP 0 653 585 A1 gibt ein System zur Betankung eines Druckgasbehälters an. Darin wird die Durchführung eines Prüfstoßes beschrieben und zu dessen Auswertung die thermische Zustandsgleichung für das reale Gas herangezogen. Es wird auch ein Umschalten auf Vorratsbehälter mit höherem Druck (Mehrbankbetrieb) während der Betankung beschrieben. Der Betankungsvorgang erfolgt intermittierend. Es ist keine Kühlvorrichtung für das Gas vorgesehen.

DE 102 18 678 A1 beschreibt ein Verfahren und eine Vorrichtung, bei dem das Gas zum Befüllen des Druckgasbehälters aus einem unter hohem Druck stehenden Vorratsbehälter über ein Wirbelrohr als Kühlvorrichtung geleitet wird. Das Wirbelrohr nutzt den bestehenden Druckunterschied im Betankungssystem aus, um den Gasstrom in einen Heißgasstrom und Kaltgasstrom zu teilen. Letzterer wird dann dem Druckgasbehälter zugeführt. Die Funktionsweise dieses Verfahrens basiert darauf, dass das Gas bei einem überkritischen Druckverhältnis einem Drallerzeuger zugeführt wird, der axial zwischen zwei Rohren angeordnet ist, die einen unterschiedlichen Eintrittsdurchmesser haben. Eine Temperaturabsenkung von Gasen gelingt dann und nur dann, wenn überkritische Druckverhältnisse vorliegen. Bei einem überkritischen Druckverhältnis für Erdgas von 1/π* <0,5427 und einem Druck von pᵥ = 250 bar im Vorratsbehälter, der in der Regel unterschritten wird, wenn mehrere Fahrzeuge kurz hintereinander betankt werden, ergibt sich ein unterkritischer Zustand, wenn im Druckgasbehälter der Druck auf p_{D} = 135 bar angestiegen ist. Das bedeutet, dass beim Befüllen eines Druckgasbehälters mit Erdgas im Druckbereich zwischen p_{D} = 135 bar bis p_{D} = 200 bar unter den durch die technischen Regeln vorgegebenen Voraussetzungen durch den Einsatz eines Wirbelrohres keine Temperaturabsenkung des Gases mehr zu erzielen ist.

WO 2006/045712 A1 behandelt das Problem der Gaskühlung nach den einzelnen Stufen eines Membranverdichters durch Wirbelrohre. Es zeigt sich, dass entweder das Stufendruckverhältnis und/oder die Stufenzahl zu erhöhen ist, um die Wirbelrohre stets bei dem überkritischen Druckverhältnis betreiben zu können. Dazu reicht ein Druckverhältnis von π = 4 bei einem vierstufigen Membranverdichter nicht aus, wenn ein Druck am Verdichterausgang von p_{A} > 250 bar erreicht werden soll. Erhöht man das Druckverhältnis π > 4, dann steigt die Stufen-Verdichtungsendtemperatur auf eine Höhe, die durch den Einsatz eines Wirbelrohres auf ein Temperaturniveau abgesenkt werden kann, das für den wirtschaftlichen Betrieb eines Membranverdichters erforderlich wäre.

WO 01/27475 A1 beschreibt einen mehrstufigen Membranverdichter, der bei einer vierstufigen Ausführung und einem Stufendruckverhältnis π = 4 einen Ausgangsdruck p_{A} = 256 bar bei einem Ansaugdruck p_{E} = 50 mbar erreichen kann. Aufgrund seiner Funktionsweise sind die Membranabmessungen begrenzt, so dass sich auch das maximal erreichbare Fördervolumen bei der in dieser Patentschrift beschriebenen Bauweise des Membranverdichters in Grenzen hält.

DE 10 2006 010 326.2 befasst sich mit einem ein- oder mehrstufigen Membranvorverdichter und einem nachgeschalteten Hochdruckverdichter in Membranbauweise für ein Gasbetankungssystem, um den Volumenstrom des Gases um mindestens das Zehnfache gegenüber einem Membranverdichter der bisher bekannten Bauweise zu erhöhen. Durch den Vorverdichter kann bei Aufteilung einer Verdichterstufe in mehrere Membrankammern, die in jeder Stufe die gleichen Abmessungen haben, ein sehr großer Volumenstrom verdichtet werden. Wird der Vorverdichter mit mehr als einer Verdichterstufe ausgestattet, dann kann die Druckerhöhung pro Stufe nicht nur im Vorverdichter sondern auch in dem nachfolgenden Hochdruckverdichter auf einen Wert zwischen p = 2,0 und p = 2,5 abgesenkt werden. Dadurch kann die Gastemperatur am Austritt des Vorverdichters und des Hochdruckverdichters niedrig gehalten werden.

Der Erfindung liegt die Aufgabe zugrunde, eine Vorrichtung zum schnellen Befüllen von Druckgasbehältern zu schaffen, mit der es möglich ist, Druckgasbehälter mit großen geometrischen Volumina, wie sie bei mit Erdgas betriebenen Bussen und bei Kommunalfahrzeugen vorliegen, in kürzester Zeit mit hochverdichtetem Gas zu befüllen, so dass eine Unterfüllung des Druckgasbehälters vermieden und eine Überfüllung ausgeschlossen wird.

Die erfindungsgemäße Vorrichtung ist durch den Patentanspruch 1 definiert.

Ein Booster-Verdichter ist ein Verdichter zur Druckerhöhung eines in dem Vorratsbehälter gespeicherten Gases während der Entnahme. Um die bei der Entnahme entstehende Kompressionswärme im Booster-Verdichter gering zu halten, wird der Gasdruck an der Eingangsseite des Booster-Verdichters so hoch gelegt, dass der Ausgangsdruck des Booster-Verdichters über dem kritischen Druck des zu befüllenden Druckgasbehälters liegt. Im Gegensatz zu dem Befüllen eines Druckgasbehälters oder eines weiteren Vorratsbehälters durch Überströmen aus einem Vorratsbehälter, in dem der Gasdruck nach den technischen Regeln beim Erdgas begrenzt ist, gelten diese Vorschriften bei der Direkt-Betankung nicht, sofern die gesetzlichen Bedingungen für den Druckgasbehälter (200 bar bei einer Referenztemperatur von 15°C) und für den Vorratsbehälter (250 bar bei einer Referenztemperatur von 15°C) eingehalten werden. Das Druckverhältnis π, das im Booster-Verdichter erzeugt wird, ist gering und liegt vorzugsweise unter 1,5, um die Erwärmung des Gases durch die Kompression unmittelbar vor der Betankung gering zu halten.

Das Gas wird zur Befüllung eines Druckgasbehälters durch Überströmen einem Vortankbehälter entnommen, der zu Beginn der Betankung unter einem Gasdruck von ca. 250 bar stehen sollte. Letzterer wird während des Überströmvorgangs zweckmäßigerweise nicht nachgefüllt. Sobald sich zwischen dem füllenden Vortankbehälter und dem zu befüllenden Druckgasbehälter während des Überströmvorgangs kein überkritisches Druckverhältnis mehr aufrecht erhalten lässt und daher die Erwärmung des Gases, bedingt durch die Einschiebearbeit, nicht mehr durch den Joule-Thomson-Effekt ausgeglichen werden kann, wird die weitere Befüllung des Druckgasbehälters aus dem Vortankbehälter abgebrochen.

Nach der Gaszufuhr über den Vortankbehälter wird über den Booster-Verdichter eine solche Druckerhöhung erzielt, dass bis zum Ende des Betankungsvorgangs stets ein kritisches Druckverhältnis zwischen dem Gas am Boosteraustritt und dem Gas im Druckgasbehälter vorliegt.

Der Booster-Verdichter entnimmt saugseitig das Gas einem Vorratsbehälter, der von einem Verdichter, unabhängig davon, ob Gas entnommen wird oder nicht, auf einen Enddruck von 250 bar aufgefüllt wird.

Hinter dem Booster-Verdichter ist ein Wirbelrohr als Kühlvorrichtung angeordnet. Das Wirbelrohr nutzt den bestehenden Druckunterschied des Gases in dem Betankungssystem aus, um den Gasstrom in einen Heißgasstrom und einen Kaltgasstrom zu teilen. Letzterer wird dem Druckgasbehälter zugeführt. Das Wirbelrohr ist von kompakter Bauart und enthält keine beweglichen Teile. Es bildet eine einfach und kostengünstige regelbare Kühlvorrichtung, deren Kühlwirkung durch Drosselung des Heißgasstroms geregelt wird. Zweckmäßigerweise wird der Heißgasstrom dem Vortankbehälter zugeführt, aus dem zu Beginn der Befüllung des Druckgasbehälters das Gas entnommen wurde.

In einer besonderen Ausführungsform der Erfindung kann das Gas auch über ein in dem Druckgasbehälter befindliches Eindüselement eingebracht werden. In dem als bidirektionale Ringspaltdüse ausgebildeten Eindüselement wird die durch die Einschiebearbeit des Gases erfolgte Erwärmung durch adiabate Drosselung, und zwar je nach dem Druckverhältnis zwischen dem einströmenden Gas und dem in dem Druckgasbehälter befindlichen Gas, ganz oder teilweise kompensiert.

Gemäß einer weiteren vorteilhaften Ausführung der Erfindung wird nach Abschluss der Befüllung des Druckgasbehälters der Vortankbehälter, aus dem bei Füllbeginn das unter hohem Druck stehende Gas entnommen wurde, über den Booster-Verdichter in sehr kurzer Zeit bis zu einem Druck von 250 bar aufgefüllt, so dass in der beschriebenen Weise weitere Betankungsvorgänge schnell hintereinander erfolgen können.

Im Folgenden wird ein Ausführungsbeispiel der Erfindung unter Bezugnahme auf die Zeichnungen näher erläutert.

Es zeigen:
- Fig. 1: einen Querschnitt einer Nockenwelle zur Ansteuerung von vier Membrankammern eines als Membranpumpe ausgebildeten Booster-Verdichters,
- Fig. 2: einen schematischen Überblick über das Gasbetankungssystem zur schnellen Umfüllung großer Gasmengen mit einem Booster-Verdichter in Membranbauweise unter Verwendung eines Wirbelrohres nach Ranque-Hilsch zur Temperaturabsenkung des Gases nach der Kompression, wobei in dem Wirbelrohr eine Trennung in Kaltgas und Heißgas erfolgt,
- Fig. 3: das gleiche Betankungssystem wie in Figur 2, jedoch unter Verwendung eines Eindüselementes mit bidirektionaler Ringspaltdüse im Druckgasbehälter zur Absenkung der Gastemperatur anstelle eines Wirbelrohres, und
- Fig. 4: ein Diagramm, aus dem der Einfluss des Ansaugdruckes am Booster-Verdichter auf dessen Gasmassendurchsatz hervorgeht.

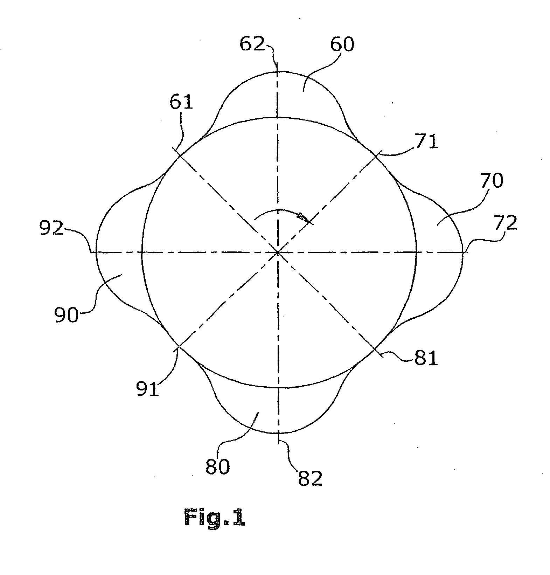

Figur 1 zeigt einen Querschnitt der Nockenwelle zur Ansteuerung von vier Membrankammern mit den vier aus Kreisbögen und Geraden zusammengesetzten Profilen 60, 70, 80, 90, die im vorliegenden Falle um 90° gegeneinander versetzt sind. Bei einer Umdrehung der Nockenwelle werden nacheinander alle vier Membrankammern nach dem Zweitaktverfahren angesteuert. An den Berührungspunkten 61, 71, 81, 91 sind mit Hilfe der Nockensteuerung die Membrankammern expandiert. Anschließend wird durch das vorgegebene Profil der Nocken bis zu den Berührungspunkten 62, 72, 82, 92 eine Kompression des Gases in den Membrankammern eingeleitet, der sich ein Ausschieben des Gases aus den Membrankammern anschließt. Der Verlauf der Expansion ist vorgegeben durch das Profil der Nockenwelle zwischen den Berührungspunkten 62 und 71 für die erste Membrankammern , 72 und 81 für die zweite Membrankammer, 82 und 91 für die dritte Membrankammer sowie 92 und 61 für die vierte Membrankammer.

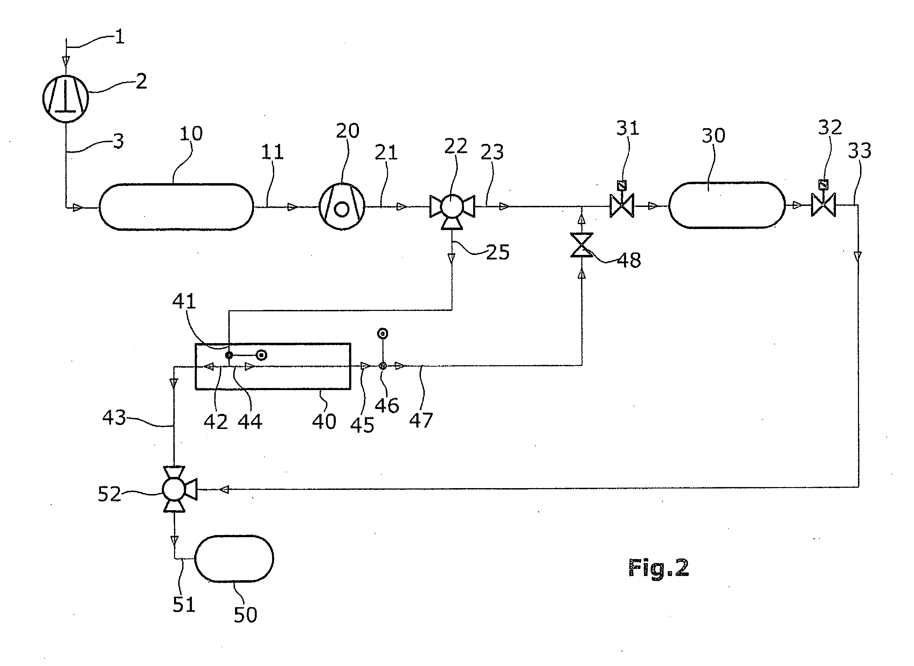

Das in Figur 2 dargestellte Gasbetankungssystem weit einen Hochdruckverdichter 2 mit einer Zuleitung 1 und einer Entnahmeleitung 3 auf, die zu dem Vorratsbehälter 10 führt, der durch den Hochdruckverdichter 2 bis zu einem maximalen Gasdruck von 250 bar aufgefüllt wird. Der Auslass des Vorratsbehälters 10 ist mit einer Entnahmeleitung 11 mit dem Einlass des als einstufiger Membranverdichter ausgebildeten Booster-Verdichters 20 verbunden. Die Auslassleitung 21 verbindet den Booster-Verdichter 20 mit dem Dreiwegehahn 22. Im Normalfalle ist der Dreiwegehahn 22 so eingestellt, dass die Gasströmung aus der Entnahmeleitung 21 in die Zuleitung 23 und über das geöffnete Magnetventil 31 in den Vortankbehälter 30 bei geschlossenem Magnetventil 32 auf der Auslassseite eingeleitet wird. Ist ein Gasdruck von 250 bar in dem Vortankbehälter 30 erreicht, dann wird der Booster-Verdichter 20 abgeschaltet und das Magnetventil 31 geschlossen.

Mit dem Öffnen des Magnetventils 32 beginnt der Betankungsvorgang durch Überströmen des Gases von dem Vortankbehälter 30 in den Druckgasbehälter 50 über die Entnahmeleitung 33 und den Dreiwegehahn 52, der bei Beginn der Betankung so eingestellt ist, dass der Dreiwegehahn 52 die Entnahmeleitung 33 mit der Tankleitung 51 des Druckgasbehälters 50 verbindet. Wird beim Überströmen des Gases aus dem Vortankbehälter 30 in den Druckgasbehälter 50 das kritische Druckverhältnis 1/π* =p_{D}/pᵥ >(2/κ+1)^{κ/κ-1}, gebildet aus den im Vortankbehälter 30 gemessenen Druck p_{V} und dem im Druckgasbehälter 50 gemessenen Druck p_{D} unterkritisch, dann wird zeitgleich das Magnetventil 32 geschlossen, der Booster-Verdichter 20 in Betrieb genommen und die vorhandene Einstellung der Dreiwegehähne 22 und 52 durch einen Schaltvorgang verändert. Hierbei ist κ der Isentropenexponent des komprimierten Gases, d. h. eine spezifische Gaskonstante. Diese beträgt bei Erdgas 1,317. p_{D} ist der Druck im zu füllenden Druckgasbehälter 50 und p_{V} ist der Druck im Vorratsbehälter 10.

Die Entnahmeleitung des Booster-Verdichters 20 ist damit über den Dreiwegehahn 22 mit der Zuleitung 25 des Wirbelrohres 40 verbunden. Das Wirbelrohr ist generell in der Weise ausgebildet, wie in DE 102 18 678 A1 beschrieben, so dass sich eine detaillierte Erläuterung des Aufbaus des Wirbelrohres erübrigt. Das Wirbelrohr dient zum Absenken der Gastemperatur nach der vorausgegangenen Kompression.

Das nach dem Gegenstromverfahren arbeitende Wirbelrohr 40 ist über die Zuleitung 25 mit dem Booster-Verdichter 20 verbunden. Durch die Zuleitung 25 gelangt die Gasströmung zu der Einströmdüse 41, die den engsten durchströmten Querschnitt zwischen dem Boosteraustritt und dem Druckgasbehälter 50 bildet. Aus der Einströmdüse 41 gelangt das Gas bei Schallgeschwindigkeit als Drallströmung in das zentrale Rohr des Wirbelrohres 40, in dem die Trennung in einen Kalt-Auslass 42 und einen Heiß-Auslass 44 erfolgt. An einem Ende des zentralen Rohres wird der kalte Kern des sich ausbildenden Wirbels als Kaltgasströmung 42 abgenommen und über die Entnahmeleitung 43 dem Dreiwegehahn 52 mit der Tankleitung 51 dem Druckgasbehälter 50 zugeführt. Am gegenüberliegenden Ende des zentralen Rohres wird die Heißgasströmung 44 abgenommen und über die Rohrleitung 45 abgeführt. Die in der Rohrleitung 45 befindliche Drosselstelle 46 dient der Voreinstellung des Massenverhältnisses zwischen Kaltgas- und Heißgasanteil.

Nach der Drosselstelle 46 gelangt der Heißgasstrom über die Rückflussleitung 47 und die Zuleitung 23 bei geöffnetem Magnetventil 31 und geschlossenem Magnetventil 32 in den Vortankbehälter 30, wo sich das Heißgas mit dem vorhandenen Gas mischt und gespeichert wird. Durch das Rückschlagventil 48 in der Rückflussleitung 47 wird vermieden, dass beim Befüllen des Vortankbehälters 30 Gas in die Rückflussleitung 47 der Heißgasströmung gelangt.

Nach Beendigung des Füllvorganges des Druckgasbehälters 50 wird der Dreiwegehahn 22 in der Entnahmeleitung 21 des Booster-Verdichters 20 auf die Zuleitung 23 zum Vortankbehälter 30 umgeschaltet, so dass bei geöffnetem Magnetventil 31 der Vortankbehälter bei geschlossenem Magnetventil 32 in der Entnahmeleitung 33 bis zum Erreichen eines Druckes von 250 bar aufgefüllt werden kann. Der Vorratsbehälter 10 hat das größere geometrische Volumen gegenüber dem Vortankbehälter 30, so dass letzterer nach einem Betankungsvorgang durch den Booster-Verdichter 20 in kurzer Zeit wieder auf den zulässigen Enddruck von 250 bar aufgefüllt werden kann.

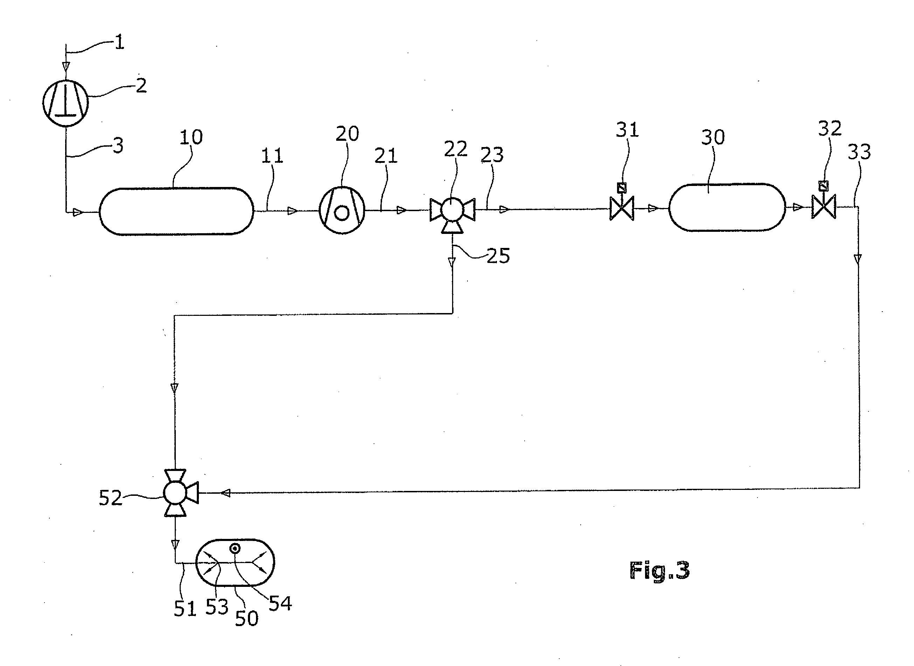

Das in Figur 3 dargestellte Gasbetankungssystem gehört nicht zur Erfindung. Es weist gegenüber demjenigen in Figur 2 anstelle des Wirbelrohres 40 zur Gaskühlung ein Eindüselement 53 in dem Druckgasbehälter 50 auf, so dass durch adiabate Drosselung und den Joule-Thomson-Effekt eine Abkühlung des Gases nach vorangehender Erwärmung durch die Einschiebearbeit erfolgt, ohne dass ein Wärmeaustausch mit der Umgebung stattfindet. Durch den Wegfall des Wirbelrohres 40 entfällt daher die Entnahmeleitung 43 für das Kaltgas und die Rückflussleitung 47 mit dem Rückschlagventil 48 für das Heißgas.

Die Zuleitung 25 ist bei diesem Gasbetankungssystem mit dem Dreiwegehahn 52 verbunden. Sobald sich beim Betanken zwischen dem Vortankbehälter 30 und dem Druckgasbehälter 50 ein unterkritisches Druckverhältnis ergibt, wird zeitgleich das Magnetventil 32 geschlossen, der Booster-Verdichter 20 in Betrieb genommen und die vorhandene Einstellung der Dreiwegehähne 22 und 52 durch einen Schaltvorgang verändert, so dass die Gasströmung aus der Auslassleitung 21 in die Zuleitung 25 geführt wird, um dann über den Dreiwegehahn 52 in die Tankleitung 51 zu gelangen. Über die Tankleitung 51 wird die Gasströmung dem Eindüselement 53 zugeführt.

Das Eindüselement 53 ist in derselben Art ausgebildet, wie in DE 100 31 155 C2 beschrieben, so dass sich eine eingehende Erläuterung des Eindüselementes erübrigt. Das Eindüselement dient zum Absenken der Gastemperatur nach der vorausgegangenen Erwärmung durch die Einschiebearbeit und zum schnellen, die Behälterwand des Druckgasbehälters 50 schonenden, Einleiten von Gas.

Das mit bidirektionalen Ringspaltdüsen ausgestattete Eindüselement 53 hat einen engsten Querschnitt 54 im Ringspalt. Bei dem durch einen Ringspalt austretenden Gasstrahl wird eine Strahloberfläche erzeugt, die ein Vielfaches der Oberfläche eines Gasstrahls beträgt, welcher aus einer flächengleichen Bohrung mit Kreisquerschnitt austritt. Durch die große Oberfläche des aus einem Ringspalt in den Druckgasbehälter 50 einströmenden Gasstrahls wird erreicht, dass sich dieser besonders schnell mit der im Behälter befindlichen Restgasmenge vermischt. Dadurch werden durch die Gasströmung örtlich verursachte Temperaturspitzen an der Behälterwand vermieden, die während des instationären Füllvorgangs ansonsten auftreten würden. Nach Füllende erfolgt aufgrund der guten Durchmischung ein schneller Temperaturausgleich des Gases im Behälter.

Dadurch, dass das Eindüselement 53 sich mit seinem kritischen Querschnitt 54 in dem Druckgasbehälter 50 befindet, erfolgt durch adiabate Drosselung und den Joule-Thomson-Effekt eine Abkühlung des Gases nach vorheriger Erwärmung durch die Einschiebearbeit und zeitgleich mit dem Schließen des Magnetventils 32 der Entnahmeleitung 33 wird der Booster-Verdichter 20 gestartet und dessen Entnahmeleitung 21 über den Dreiwegehahn 22 auf die Leitung 25 des Dreiwegehahns 52 umgelegt. Dadurch stellt der Dreiwegehahn 52 durch Umschalten die Verbindung zu der Tankleitung 51 her, die den Druckgasbehälter 50 füllt.

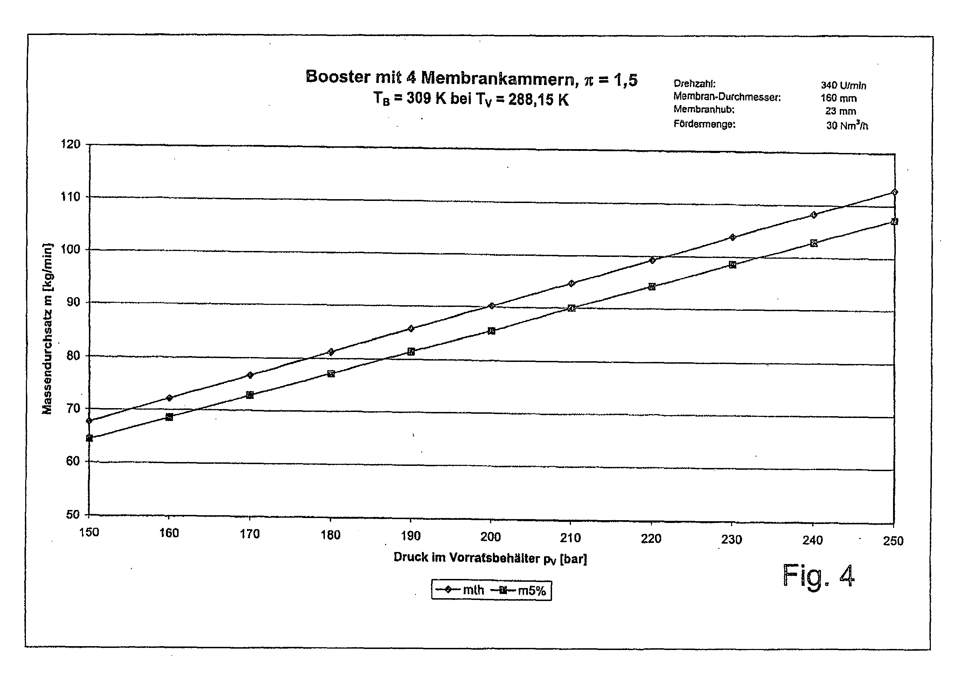

Das in Figur 4 dargestellte Diagramm pᵥ = f(m) zeigt den Einfluss des Druckes pv im Vorratsbehälter 10 auf den Massendurchsatz m des Booster-Verdichters 20 für die in der Überschrift des Diagramms angegebenen Auslegungsdaten des Booster-Verdichters. Hierbei stellt die Gerade pᵥ = f(mₜₕ) verlustfrei berechnete Werte und die Gerade pᵥ = f(m_{5%}) Werte dar, die mit einem angenommenen Gesamtverlust von 5 % im Booster-Verdichter 20 berechnet wurden.

## Patentansprüche

1. Vorrichtung zum schnellen Befüllen von Druckgasbehältern (50), mit einem Vorratsbehälter (10), in den Gas durch einen Verdichter (2) eingeführt wird, und einem Booster-Verdichter (20), der dem Vorratsbehälter (10) zur Druckerhöhung nachgeschaltet ist, wobei der Auslass des Booster-Verdichters (20) über eine erste Ventilvorrichtung (22) selektiv mit einem Vortankbehälter (30) oder mit einer zu dem Druckgasbehälter (50) führenden Tankleitung (51) verbindbar ist und der Auslass des Vortankbehälters (30) mit der Tankleitung (51) verbindbar ist, wobei bei Absinken des Druckes im Vortankbehälter unter einen Grenzwert eine Umschaltung der Tankleitung (51) auf den Auslass des Booster-Verdichters (20) erfolgt,
**dadurch gekennzeichnet, dass**
zwischen den Auslass des Booster-Verdichters (20) und die Tankleitung (51) ein Wirbelrohr (40) geschaltet ist, dessen Kalt-Auslass (42) mit der Tankleitung (51) verbindbar ist und dessen Warm-Auslass (44) mit dem Einlass des Vortankbehälters (30) verbindbar ist.

2. Vorrichtung nach Anspruch 1, **dadurch gekennzeichnet, dass** an die Tankleitung (51) ein Eindüselement (53) angeschlossen ist.

3. Vorrichtung nach Anspruch 1 oder 2, **dadurch gekennzeichnet, dass** der Booster-Verdichter (20) ein niedriges Druckverhältnis von π<1,5 hat, so dass bei geringer Erwärmung des Gases ein großer Massenstrom schnell auf ein höheres Druckniveau angehoben wird.

4. Vorrichtung nach Anspruch 3, **dadurch gekennzeichnet, dass** der einstufige Booster-Verdichter (20) mindestens zwei parallel verdichtende Membrankammern aufweist.

5. Vorrichtung nach Anspruch 4, **dadurch gekennzeichnet, dass** mindestens zwei Membrankammern sternförmig um eine Nockenwelle angeordnet sind, die so aufgebaut ist, dass bei einer Umdrehung der Nockenwelle nacheinander eine Kompression und Expansion des Gasstroms in allen Membrankammern erfolgt.

6. Vorrichtung nach Anspruch 5, **dadurch gekennzeichnet, dass** bei mehr als vier Membrankammern diese als Doppel- oder Mehrfachsternanordnung um eine Nockenwelle aufgebaut sind.

7. Vorrichtung nach einem der Ansprüche 1 - 6, **dadurch gekennzeichnet, dass** bei Beginn der Betankung das unter einem Druck von etwa 250 bar stehende Gas aus dem Vortankbehälter (30), dessen Zuleitung (23) durch ein Magnetventil (31) geschlossen ist, über eine Entnahmeleitung (33) der Tankleitung (51) zugeführt wird.

8. Vorrichtung nach Anspruch 7, **dadurch gekennzeichnet, dass** die Befüllung des Druckgasbehälters (50) aus dem Vortankbehälter (30) durch Schließen eines Magnetventils (32) in der Entnahmeleitung (33) dann abgebrochen wird, wenn das kritische Druckverhältnis 1/π* =p_{D} /pᵥ > (2/κ+1)^{κ/κ-1} beim Überströmen von dem Vortankbehälter (30) in den Druckgasbehälter (50), gebildet aus dem im Druckgasbehälter gemessenen Druck (p_{D}) und dem im Vortankbehälter (30) gemessenen Druck pᵥ zwischen dem füllenden und dem zu befüllenden Behälter unterkritisch 1/π* =p_{D}/pᵥ >(2/κ+1)^{κ/κ-1} wird, wobei κ der Isotropenexponent des Gases ist.

9. Vorrichtung nach einem der Ansprüche 1 - 8, **dadurch gekennzeichnet, dass** zeitgleich mit dem Schließen eines Magnetventils (32) in der Entnahmeleitung (33) des Vortankbehälters (30) der Booster-Verdichter (20) gestartet wird und dessen Entnahmeleitung (21) über einen Dreiwegehahn (22) auf die Zuleitung (25) eines Wirbelrohres (40) umgelegt wird und über einen weiteren Dreiwegehahn (52) die Kaltgasströmung (43) mit der Tankleitung (51) des Druckgasbehälters (50) verbunden wird und weitere Befüllung des Druckgasbehälters aus dem Vorratsbehälter (10) über den Booster-Verdichter (20) zur Druckerhöhung und das Wirbelrohr (40) zur Gaskühlung so lange erfolgt, bis in dem Druckgasbehälter ein vorbestimmter Druck bei einer Referenztemperatur erreicht ist.

10. Vorrichtung nach Anspruch 7, **dadurch gekennzeichnet, dass** nach Beendigung des Füllvorganges des Druckgasbehälters (50) die Füllvorrichtung (22) in der Entnahmeleitung (21) des Booster-Verdichters (20) auf den Vortankbehälter (30) umgeschaltet wird.

## Claims

1. An apparatus for the rapid filling of compressed-gas containers (50), comprising a reservoir (10) into which gas is introduced by a compressor (2) and to which a booster compressor (20) for increasing the pressure is connected downstream of the reservoir (10), wherein the outlet of the booster compressor (20) can be selectively connected - via a first valve device (22) - to a pre-filling container (30) or to a filling line (51) leading to the compressed-gas container (50), and the outlet of the pre-filling container (30) can be connected to the filling line (51), wherein, when the pressure in the pre-filling container falls below a limit value, the filling line (51) is switched to the outlet of the booster compressor (20),
**characterized in that**
a cyclone tube (40) is connected between the outlet of the booster compressor (20) and the filling line (51), the cold outlet (42) of the tube being connectable to the filling line (51) and the warm outlet (44) being connectable to the inlet of the pre-filling container (30).

2. The apparatus of clam 1, **characterized in that** an injection element (53) is connected to the filling line (51).

3. The apparatus of claim 1 or 2, **characterized in that** the booster compressor (20) has a lower pressure ratio of π < 1.5 so that upon a slight heating of the gas a large mass flow is rapidly brought to a higher pressure level.

4. The apparatus of claim 3, **characterized in that** the single-stage booster compressor (20) comprises at least two membrane chambers compressing in parallel.

5. The apparatus of claim 4, **characterized in that** at least two membrane chambers are arranged in a star shape around a camshaft which is designed such that in one rotation of the camshaft a compression and an expansion of the gas flow take place successively in all membrane chambers.

6. The apparatus of claim 5, **characterized in that**, if more than four membrane chambers are provided, these are configured as a double- or multistar arrangement around the camshaft.

7. The apparatus of one of claims 1 - 6, **characterized in that**, at the beginning of a filling process, the gas at a pressure of approximately 250 bar is supplied from the pre-filling container (30), whose feed line (23) is closed by a magnetic valve (31), to the feed line (51) via a take-off line (33).

8. The apparatus of claim 7, **characterized in that** the filling of the compressed-gas container (50) from the pre-filling container (30) is aborted by closing a magnetic valve (32) in the take-off line (33) in the event that the critical pressure ratio 1/π*= p_{D}/pᵥ>(2/K+1)^{k/K-1} between the filling container and the container to be filled becomes subcritical 1/π*= p_{D}/pᵥ> (2/K+1)^{k/K-1} during the overflow from the pre-filling container (30) into the compressed-gas container (50), which ratio is formed from the pressure (p_{D}) measured in the compressed-gas container and the pressure (pᵥ) measured in the pre-filling container, where k is the adiabatic exponent of the gas.

9. The apparatus of one of claims 1 - 8, **characterized in that** simultaneous with the closing of a magnetic valve (32) in the take-off line (33) of the pre-filling container (30), the booster compressor (20) is started and the take-off line (21) thereof is switched to the feed line (25) of a cyclone tube (40) by means of a three-way tap (22) and the cold gas flow (43) is connected to the filling line (51) of the compressed-gas container (50) via another three-way tap (52), and the compressed-gas container is continued to be filled from the reservoir (10) via the booster compressor (20) in order to increase the pressure and via the cyclone tube (40) to cool the gas, until a predetermined pressure is reached in the compressed-gas container at a reference temperature.

10. The apparatus of claim 7, **characterized in that** after the end of the filling of the compressed-gas container (50), the filling device (22) in the take-off line (21) of the booster compressor (20) is switched to the pre-filling container (30).

## Revendications

1. Dispositif pour le remplissage rapide de récipients de gaz sous pression (50), comprenant un réservoir (10) dans lequel gaz est introduit par un compresseur (2), et un compresseur booster (20) connecté en aval du réservoir (10) pour augmenter la pression, la sortie du compresseur booster (20) étant apte à être connectée par l'intermédiaire d'un premier dispositif de soupape (22) sélectivement à un réservoir de pré-remplissage (30) ou à une conduite de remplissage (51) qui conduit au récipient de gaz sous pression (50), et la sortie du réservoir de pré-remplissage (30) étant apte à être connecté à la conduite de remplissage (51), où, si la pression dans le réservoir de pré-remplissage plonge sous une valeur limite, la conduite de remplissage (51) est commutée sur la sortie du compresseur booster (20),
**caractérisé en ce que**
un tube à cyclone (40) est connecté entre la sortie du compresseur booster (20) et la conduite de remplissage (51), la sortie à froid (42) dudit tube étant apte à être connectée à la conduite de remplissage (51) et la sortie à chaud (44) du tube étant apte à être connectée à l'entrée du réservoir de pré-remplissage (30).

2. Dispositif selon la revendication 1, **caractérisé en ce qu'**un élément injecteur (53) est connecté à ladite conduite de remplissage (51).

3. Dispositif selon la revendication 1 ou 2, **caractérisé en ce que** ledit compresseur booster (20) a un rapport de pression bas de π < 1,5 de sorte qu'un grand débit massique est rapidement levé sur un niveau de pression plus élevé, n'échauffant le gaz que faiblement.

4. Dispositif selon la revendication 3, **caractérisé en ce que** ledit compresseur booster à un étage (20) comprend au moins deux chambres à membrane compressant en parallèle.

5. Dispositif selon la revendication 4, **caractérisé en ce qu'**au moins deux chambres à membrane sont disposées en étoile autour d'un arbre à cames configuré de façon que, pendant un tour de l'arbre à cames, une compression et une expansion du flux de gaz sont effectuées successivement dans toutes les chambres à membrane.

6. Dispositif selon la revendication 5, **caractérisé en ce qu'**au cas de plus que quatre chambres à membrane, celles sont configurées comme des structures en étoile double ou multiple autour d'un arbre à cames.

7. Dispositif selon l'une quelconque des revendications 1-6, **caractérisé en ce qu'**au commencement du remplissage le gaz, qui sous une pression d'environ 250 bar, est alimenté du réservoir de pré-remplissage (30), dont la conduite d'amenée (23) est fermée par une soupape magnétique (31), à la conduite de remplissage (51) par une conduite de prélèvement (33).

8. Dispositif selon la revendication 7, **caractérisé en ce que** le remplissage du récipient de gaz sous pression (50) à partir du réservoir de pré-remplissage (30) est interrompu par la fermeture d'une soupape magnétique (32) dans la conduite de prélèvement (33) si, lors de l'écoulement du gaz à partir du réservoir de pré-remplissage (30) dans ledit récipient de gaz sous pression (50), le rapport de pression critique de 1/π*= p_{D}/p_{V}>(2/K+1)^{k/K-1}, formé par la pression (pₚ) mesurée dans ledit récipient de gaz sous pression et la pression pᵥ mesurée dans le réservoir de pré-remplissage (30), devient sous-critique 1/π*= p_{D/}pᵥ> (2/K+1)^{k/K-1} entre le récipient remplissant et le récipient à remplir, où K indique l'exposant isotrope du gaz.

9. Dispositif selon l'une quelconque des revendications 1-8, **caractérisé en ce que**, au moment de la fermeture d'une soupape magnétique (32) dans la conduite de prélèvement (33) du réservoir de pré-remplissage (30), le compresseur booster (20) est déclenché et sa conduite de prélèvement (21) est commuté sur la conduite d'amenée (25) d'un tube à cyclone (40) par l'intermédiaire d'une vanne à trois voies (22) et, par l'intermédiaire d'une autre vanne à trois voies (52), le flux de gaz froid (43) est connecté à la conduite de remplissage (51) du récipient de gaz sous pression (50) et le remplissage du récipient de gaz sous pression à partir du réservoir (10) par l'intermédiaire du compresseur booster (20) pour l'augmentation de la pression et par l'intermédiaire du tube à cyclone (40) pour le refroidissement du gaz est poursuivi jusqu'à une pression prédéterminée existe dans le récipient de gaz sous pression à une température de référence.

10. Dispositif selon la revendication 7, **caractérisé en ce qu'**après la terminaison du remplissage du récipient de gaz sous pression (50), le dispositif de remplissage (22) dans la conduite de prélèvement (21) du compresseur booster (20) est commuté sur le réservoir de pré-remplissage (30).
